# EUROPÄISCHE PATENTSCHRIFT

(11) **EP 2 847 012 B1**
(45) Veröffentlichungstag und Bekanntmachung des Hinweises auf die Patenterteilung: **31.08.2016**
(21) Anmeldenummer: 13730466.3
(22) Anmeldetag: 02.05.2013
(51) Int. Cl.: B60G 11/113, F16F 1/368, B60G 11/46

(54) **ACHSEINBINDUNG FÜR EINE GEFEDERTE FAHRZEUGACHSE**
AXLE FIXATION FOR A SPRUNG VEHICLE AXLE
FIXATION D'ESSIEU POUR UN ESSIEU SUSPENDU DE VÉHICULE

(30) Priorität: 07.05.2012 DE 102012103961
(43) Veröffentlichungstag der Anmeldung: 18.03.2015
(73) Patentinhaber: BPW Bergische Achsen KG, 51674 Wiehl (DE)
(72) Erfinder: KOPPLOW, Hans-Werner, 51588 Nümbrecht (DE); KRIEGESKOTTE, Thomas, 51580 Reichshof (DE); MICHELS, Manfred, 51067 Köln (DE)
(74) Vertreter: Bungartz Christophersen Partnerschaft mbB Patentanwälte
(86) Internationale Anmeldenummer: PCT/DE2013/100161
(87) Internationale Veröffentlichungsnummer: WO 2013/167118

(56) Entgegenhaltungen:
- EP-A1- 1 273 464
- EP-A2- 1 249 356
- EP-A2- 1 958 801
- EP-B1- 0 810 109
- DE-A1- 10 110 495
- DE-A1- 19 946 802
- DE-A1-102009 030 633
- DE-U1- 9 305 039
- DE-U1- 29 713 996
- FR-A5- 2 088 906

## Beschreibung

Die Erfindung betrifft eine Achseinbindung für eine gefederte Fahrzeugachse nach dem Oberbegriff des Patentanspruchs 1. Die Erfindung betrifft ferner eine für eine solche Achseinbindung geeignete Achsplatte nach dem Oberbegriff des Patentanspruchs 10 und einen ebenfalls für eine solche Achseinbindung geeigneten Achslenker nach dem Oberbegriff des Anspruchs 18.

Eine solche Achseinbindung unter Verwendung einer zwischen dem Achskörper und dem Achslenker in deren Kreuzungsbereich angeordneten Achsplatte ist aus der EP 0 810 109 B1 bekannt. Die Achsplatte ist in ihrer Mitte verformbar gestaltet und sie ist auf ihrer ersten, dem Achslenker zugewandten Seite mit zwei leistenförmigen Druckflächen versehen. Durch Aufbringen einer Zugkraft mittels als U-Bügel gestalteter Zugelemente kommt es zu einem Biegen der Achsplatte im Verformungsbereich, und zu einem Klemmen des Achskörpers zwischen zwei Backen an der zweiten Seite der Achsplatte.

In Fig. 1 ist die Achseinbindung nach der EP 0 810 109 B1 im Montagezustand, d. h. bei angezogenen U-Bügeln dargestellt. Die Achsplatte 5 biegt sich in ihrem Verformungsbereich 10, wodurch ihre zwei Backen 11, 12 etwas verschwenken, und die Innenflächen 11A, 11B der Backen gegen die Vorder- und der Rückseite des Achskörpers 1 klemmen. Nach Beginn der Verformung besteht nur noch an den mit A und B bezeichneten Innenkanten der im Übrigen leistenförmigen Druckflächen ein Kontakt zwischen Achsplatte 5 und Achslenker 2. Bei den beiden Orten A und B handelt es sich insoweit um linienförmige Schwenklager bei dem Verschwenken der Backen 11, 12. Ein Nachteil dieser Bauweise ist, dass es trotz der eigentlich leistenförmigen Druckflächen zu hohen lokalen Flächenpressungen im Anlagebereich zwischen Achsplatte und Achslenker kommt. Auch die Haltekräfte in Längsrichtung des Achslenkers durch Reibung und damit Kraftschluss werden nur entlang der Kontaktlinien übertragen. Zudem verbleibt im Anlagebereich ein Bewegungsfreiheitsgrad senkrecht zur Fläche.des Achslenkers, so dass der Verbund aus Achskörper, Achslenker und dazwischen angeordneter Achsplatte mehr Bewegungsfreiheitsgrade als für eine sichere Achseinbindung wünschenswert hat.

Mit der Erfindung angestrebt wird eine Achseinbindung für eine gefederte Fahrzeugachse mit weniger Freiheitsgraden im Verbund aus Achskörper, Achslenker und dazwischen angeordneter Achsplatte.

Zur **Lösung** dieser Aufgabe wird eine Achseinbindung mit den Merkmalen des Patentanspruchs 1 vorgeschlagen.

Ein solches Verbundsystem aus Achskörper, Achslenker und dazwischen angeordneter Achsplatte arbeitet mit weniger verbleibenden Freiheitsgraden und einem zuverlässigeren Halt der Achsplatte am Achslenker. Dies wird erreicht, indem die Stützbereiche an der dem Achslenker zugewandten ersten Seite der Achsplatte zunächst, d.h. bei noch unverformter Achsplatte, ein flaches "V" bilden. Die maximal mögliche Verformung ist dann erreicht, wenn sich die Stützbereiche soweit zu dem Achslenker hin bewegt haben, dass es in den beiden Stützbereichen, die selbst jeweils flach bzw. eben gestaltet sind, zu einem flächigen Anliegen der Achsplatte gegen den Achslenker kommt. In diesem Verformungszustand besteht keine nennenswerte Beweglichkeit in Richtung der Flächennormale des Achslenkers mehr.

Zur **Lösung** der Aufgabe wird ferner eine im Kreuzungsbereich zwischen Achskörper und Achslenker anzuordnende Achsplatte mit den Merkmalen des Patentanspruchs 9 vorgeschlagen.

Von Vorteil in Bezug auf die Minimierung der noch möglichen Bewegungsfreiheitsgrade der Achseinbindung ist ferner, wenn sich die beiden Stützbereiche der Achsplatte jeweils so weit zu dem Verformungsbereich der Achsplatte hin erstrecken, dass ihr gegenseitiger Abstand geringer ist, als die Breite des an der Achsplatte ausgebildeten Mauls für den Achskörper.

Mit einer weiteren Ausgestaltung wird vorgeschlagen, dass die beiden Stützbereiche an ihren einander abgewandten Rändern als abgerundete Außenkanten gestaltet sind. Bei der Montage der Achseinbindung kommt der erste Kontakt zwischen Achsplatte und Achslenker im Bereich dieser abgerundeten Kanten zustande. Diese bilden gleichsam das Schwenklager während der Verformung des Achslappens bis zu jenem Zustand, in dem dieser mit seinen beiden Stützbereichen flächig gegen den Achslenker anliegt.

Im Hinblick auf das Ziel einer Achseinbindung bzw. einer Achsplatte mit weniger Bewegungsfreiheitsgraden wird mit einer weiteren Ausgestaltung vorgeschlagen, dass die Achsplatte zu dem Achslenker hin mit zwei Vorsprüngen versehen ist, an denen einander abgewandt Druckflächen ausgebildet sind, wobei jeder Druckfläche gegenüberliegend der Achslenker mit einer Gegendruckfläche versehen ist, und sich nur vor dem Verformen ein Spalt zwischen der jeweiligen Druckfläche und Gegendruckfläche befindet. Ergebnis dieser Maßnahme ist die Möglichkeit einer formschlüssigen Verriegelung der Achsplatte in Achslenkerrichtung an dem Achslenker, und damit in Fahrtrichtung des Fahrzeugs.

Mit einer weiteren Ausgestaltung wird vorgeschlagen, dass die die Achsplatte formschlüssig gegenüber dem Achslenker verriegelnden Vorsprünge von den Stützbereichen umgeben sind. Die Vorsprünge können z. B. als Zapfen ausgebildet sein. Sie sind vorzugsweise rechtwinklig zu dem jeweiligen Stützbereich angeordnet.

Ferner vorgeschlagen wird, dass sich jede Gegendruckfläche an der Wandung eines Sacklochs in dem Achslenker befindet.

Von Vorteil im Hinblick auf die Belastung des als Achsrohr gestalteten Achskörpers ist, wenn dieser, zumindest zu Beginn des Verformens der Achsplatte, ausschließlich gegen zwei an der Maulbasis ausgebildete Druckflächen abgestützt ist, von denen die erste Druckfläche im Abstand vor, und die zweite Druckfläche im Abstand hinter der Maulmitte angeordnet ist.

Zur **Lösung** der Aufgabe wird ferner ein Achslenker zur Führung eines Achskörpers einer Fahrzeugachse mit den Merkmalen des Patentanspruchs 16 vorgeschlagen.

Die Erfindung wird im Folgenden näher erläutert, wobei auf die Zeichnungen Bezug genommen wird. Es zeigen:
- Fig. 1: einen Schnitt durch eine Achseinbindung für eine gefederte Fahrzeugachse nach dem Stand der Technik, nämlich nach der EP 0 810 109 B1;
- Fig. 2: eine Übersichtsdarstellung einer erfindungsgemäßen Achseinbindung nach Abschluss der Montage, wobei der Achskörper jenseits der Achseinbindung geschnitten dargestellt ist;
- Fig. 3: einen mit Fig. 1 vergleichbaren Schnitt durch die Bestandteile einer erfindungsgemäßen Achseinbindung, vor der Montage derselben, wobei lediglich der Achseinbindungsbereich des Achslenkers gezeigt ist, und
- Fig. 4: die Achseinbindung nach Fig. 3 nach Abschluss der Montage, wobei sich die in der Achseinbindung enthaltene Achsplatte gegenüber dem Zustand nach Fig. 3 verformt hat.

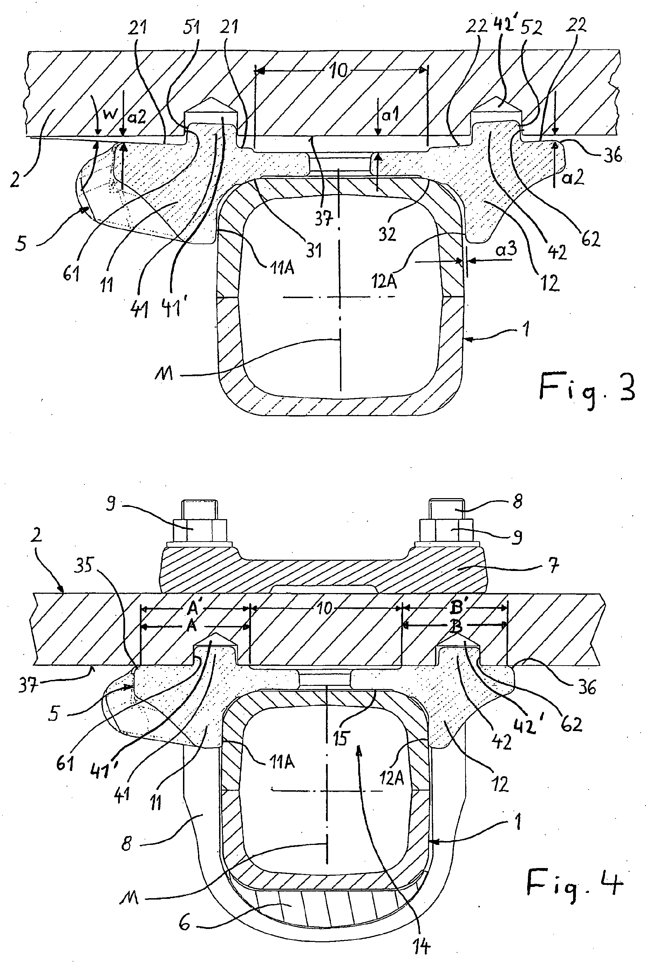

Die in Fig. 3 vor Beginn, und in Fig. 4 nach Abschluss der Montage dargestellte Achseinbindung kommt vor allem bei nichtangetriebenen, luftgefederten Fahrzeugachsen für schwere Anhängerfahrzeuge und insbesondere Lkw-Anhänger und Sättelauflieger zum Einsatz.

Unter einem Fahrzeugrahmen des Fahrzeugs sind zu beiden Fahrzeugseiten Stützen befestigt, an denen jeweils ein die Fahrzeugachse führender, als Längslenker dienender Achslenker 2 verschwenkbar gelagert ist. Zwischen dem rückwärtigen Ende des Achslenkers 2 und dem Fahrzeugrahmen sind üblicherweise Luftfederbälge angeordnet. Die beiden Achslenker 2 führen einen Achskörper 1, der hier als Achsrohr von im Wesentlichen quadratischem Querschnitt mit Eckenradien gestaltet ist. An den beiden Enden des von der einen bis zur anderen Fahrzeugseite durchgehend gestalteten Achskörper 1 ist dieser mit Achsschenkeln versehen, auf denen sich die Fahrzeugräder über Wälzlagerungen drehen.

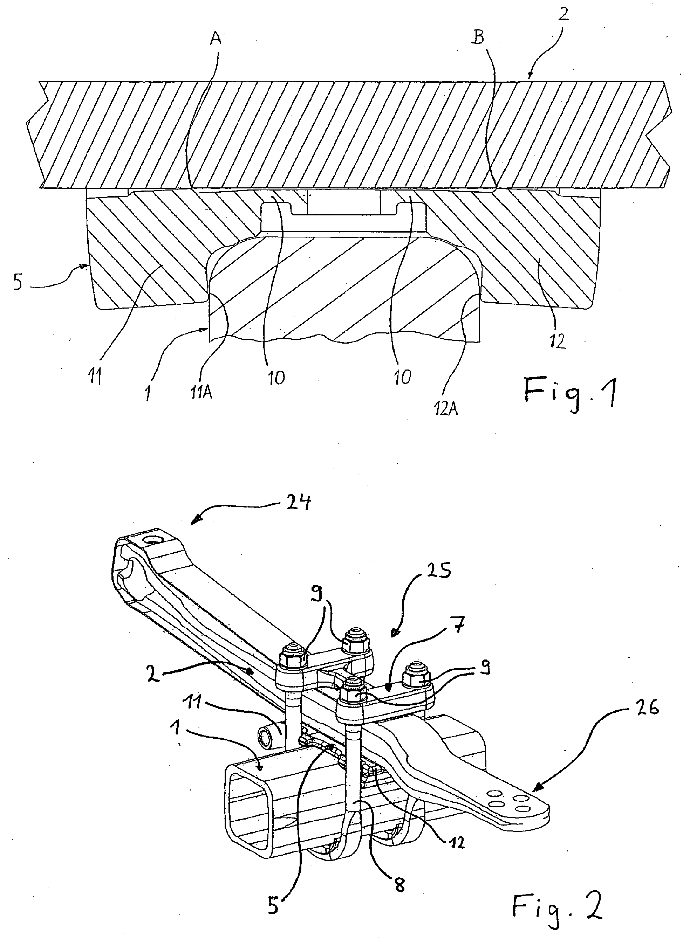

Fig. 2 ist eine Übersichtsdarstellung der Achseinbindung, die den gesamten Achslenker 2 zeigt. Der Achslenker 2 weist zu seiner Befestigung an den Stützen an seinem vorderen Ende einen Stützbereich 24, und zur Befestigung eines Luftfederbalgs einer Luftfeder an seinem rückwärtigen Ende einen Befestigungsbereich 26 auf. Zwischen dem Stützbereich 24 und dem Befestigungsbereich 26 weist der Achslenker 2 einen Achseinbindungsbereich 25 auf, also den Bereich der Verbindung des Achslenkers 2 mit dem Achskörper 1.

Zu jeder Achseinbindung, also Verbindung des Achskörpers mit dem Achslenker, gehören außerdem eine Achsplatte 5, ein Achslappen 6, eine Federplatte 7, Zugstangen 8 in Gestalt von U-Bügeln und Sicherungsmuttern 9.

Die Achsplatte 5 stützt sich mit ihrer ersten, in den Figuren 3 und 4 nach oben weisenden Seite an dem Achslenker, und mit ihrer zweiten, in den Figuren 3 und 4 nach unten weisenden Seite an dem Achskörper ab. An dieser zweiten Seite ist an der Achsplatte 5 ein den Achskörper 1 teilweise übergreifendes Maul 14 ausgebildet, bestehend aus einer Maulbasis 15 sowie Innenflächen 11A, 12A, die an Backen 11, 12 des Mauls ausgebildet sind.

Die paarweise verwendeten Zugstangen 8 sind als U-Bügel gestaltet, und ihre gebogenen Bügelenden sind um den Achslappen 6 herumgeführt. Durch Anziehen der Sicherungsmuttern 9 wird in den Zugstangen 8 eine Zugspannung erzeugt, wodurch die Achsplatte 5 zwischen Achslenker 2 und Achskörper 1 eingeklemmt wird, und sich verformt. Über die Federplatte 7 stützen sich die Sicherungsmuttern 9 von oben her auf dem Achslenker 2 ab.

Für die Achseinbindung wesentlich ist, dass die Achsplatte 5, in etwa auf der Mitte ihrer in Achslenkerrichtung betrachteten Länge, einen Verformungsbereich 10 aufweist, in dem die Achsplatte 5 eine gegenüber ihren übrigen Materialbereichen erhöhte Verformbarkeit aufweist. Erzielt werden kann diese durch eine geringere Materialdicke im Bereich des Verformungsbereichs 10, oder zusätzlich oder alternativ durch Aussparungen, Materialwegnahmen etc. in diesem Bereich 10.

Die Fig. 3 lässt erkennen, dass, vor der Montage der Achseinbindung, die Achsplatte 5 in dem Verformungsbereich 10 einen größeren Abstand a1 zu der gegenüberliegenden Fläche des Achslenkers 2 aufweist, als die Abstände a2 im Bereich der Enden der Achsplatte, die jeweils als gerundete Außenkanten 35, 36 gestaltet sind. Wird daher die Achsplatte 5 gegen den Achslenker 2 gesetzt, kommt es zunächst zu einem Kontakt ausschließlich im Bereich der Außenkanten 35, 36. Beginnend an diesen Außenkanten 35, 36 erstrecken sich Stützbereiche 21, 22 zu dem Verformungsbereich 10 hin. Die beiden Stützbereiche 21, 22 sind jeweils für sich eben gestaltet. Sie weisen jedoch in der Ausgangsposition nach Fig. 2 einen Anstellwinkel w zu der gegenüberliegenden Fläche 37 des Achslenkers 2 auf, wodurch die beiden Stützbereiche 21, 22 bei unverformter Achsplatte 5 gemeinsam ein flaches "V" aufspannen.

Die Größe des Winkels w kann zwischen 1,25° und 5° betragen, besonders günstig sind 3,2°. In diesem Fall umfasst der von den zwei Stützbereichen 21, 22 eingeschlossene Winkel 170° bis 177,5°, und idealerweise 173,6°.

Bei Ansetzen des als Achskörpers 1 und Aufbringen einer Zugbelastung über die Zugelemente 8, 9 kommt es zu der angestrebten Verformung der Achsplatte 5. Während dieser Verformung besteht zunächst ein Kontakt zwischen Achsplatte 5 und Achslenker 2 nur an den beiden abgerundet gestalteten Außenkanten 35, 36, welche die äußere Begrenzung der beiden Stützbereiche 21, 22 bilden. Die Außenkanten 35, 36 bilden hierbei gleichsam jeweils Schwenklager, um die herum die Achsplatte 5 solange verformt, bis die vollständig eben gestalteten Stützbereiche 21, 22 flach gegen die gegenüberliegende Fläche 37 des Achslenkers 2 anliegen. Dieser Endzustand ist in Fig. 4 dargestellt. Der im Ausgangszustand nach Fig. 3 noch bestehende Anstellwinkel w wird hierbei zu Null, und das flache "V" wird bis auf etwa 180° aufgespreizt. Es kommt dadurch zu einem großflächigen und mit wenig Flächendruck arbeitenden Kontakt in beiden Anlageorten A und B bzw. Stützbereichen 21, 22, ohne dass im Anlagebereich noch ein Bewegungsfreiheitsgrad senkrecht zu der Fläche 37 besteht. Zudem kommt es im Anlagebereich zwischen Achsplatte 5 und Achslenker 2 zu keinen hohen Flächenpressungen, und auch die Haltekräfte in Längsrichtung des Achslenkers durch Reibung und damit Kraftschluss werden über Flächen und nicht nur lokal begrenzt übertragen.

Von Vorteil ist, dass es in dem Maul 14 nicht zu einem vollflächigen Kontakt zwischen Achskörper 1 und Maul 14 kommt, vielmehr der Achskörper 1 zu Beginn des Verformens ausschließlich gegen zwei an der Maulbasis 15 ausgebildete Druckflächen 31, 32 abgestützt ist. Die erste Druckfläche 31 ist im Abstand vor, und die zweite Druckfläche 32 ist im Abstand hinter der Maulmitte M angeordnet. Die Druckflächen 31, 32 sind leistenförmig gestaltet.

In der Ausgangsposition Fig. 3 weisen die Innenflächen 11A, 12A der beiden Backen 11, 12 noch einen geringen Abstand a3 zu der jeweiligen Vorder- bzw. Rückseite des Achskörpers 1 auf. Dieser Abstand a3 wird bei der Verformung der Achsplatte 5 zu Null, so dass es zu einem spielfreien Kontakt, vorzugsweise einem Klemmen der beiden Innenflächen 11A, 12A gegen den Achskörper 1 kommt, wie in Fig. 4 dargestellt. Voraussetzung ist, dass jene Bereiche der Achsplatte 5, an denen sowohl die Stützbereiche 21, 22 als auch die Innenflächen 11A, 12A angeformt sind, sich im Wesentlichen starr verhalten, zumindest aber weniger verformen können als der Verformungsbereich 10.

Hinsichtlich der Größe der Stützbereiche 21, 22 bzw. Anlageorte A, B ist es von Vorteil, dass diese sich jeweils so weit zu dem Verformungsbereich 10 hin erstrecken, dass ihr gegenseitiger Abstand gering ist und insbesondere geringer ist, als die zwischen den Innenflächen 11A, 12A gemessene Breite des Mauls 14. Erreicht wird dies, indem sich die beiden Anlageorte A, B unmittelbar an den Verformungsbereich 10 anschließen.

Von Vorteil an der Lage der leistenförmigen Druckflächen 31, 32 ist, dass diese sich dort befinden, wo der Achskörper 1 trotz seiner Rohrgestalt eine erhöhte Festigkeit aufweist. Die Wanddicke des Achskörpers 1 ist nämlich im Bereich der viertelkreisförmigen Eckenrundungen größer, als in den übrigen Wandbereichen. Zum Kontakt mit den Druckflächen 31, 32 der Achsplatte 5 kommt es nur dort, wo der Achskörper 1 seine etwas größere Wanddicke und daher eine höhere Festigkeit aufweist. Die Druckbelastung des Achskörpers erfolgt also ausschließlich in seinen besser belastbaren Umfangsbereichen.

Mit der Achseinbindung wird ferner ein Formschluss zwischen Achsplatte 5 und Achslenker 2 in Achslenkerrichtung erzielt. Zu diesem Zweck ist die Achsplatte 5 zu dem Achslenker hin mit Vorsprüngen 41, 42 und der Achslenker 2 mit entsprechenden Ausnehmungen 41', 42' versehen. Die Vorsprünge 41 befinden sich vor, und die Vorsprünge 42 hinter der Maulmitte M, und an ihnen sind, einander abgewandt, Druckflächen 51, 52 ausgebildet. Gegenüberliegend jeder Druckfläche 51, 52 sind die Ausnehmungen 41', 42' des Achslenkers 2 mit jeweils einer Gegendruckfläche 61, 62 versehen. Vor Beginn der Verformung (Fig. 3) befindet sich noch ein Spalt zwischen der Druckfläche 51, 52 und der jeweiligen Gegendruckfläche 61, 62. Mit der Verformung der Achsplatte 5 werden auch diese Spalte zu Null, so dass es in Längsrichtung des Achslenkers 2 zu einer Verriegelung der Achsplatte 5 infolge Formschluss kommt.

Die Vorsprünge 41, 42 sind als Zapfen gestaltet, die von den flach und eben gestalteten Stützbereichen 21, 22 bzw. Anlageorten A, B umgeben sind. Die Zapfen 41, 42 erstrecken sich vorzugsweise rechtwinklig zu den sie umgebenden Stützbereichen 21, 22.

Die Gegendruckflächen 61, 62 sind in herstellungstechnisch einfacher Weise als Wandungen von Sacklöchern 41', 42' gestaltet, mit denen der Achslenker 2 in seiner Fläche 37 versehen ist. Um eine Schwächung des Achslenkers 2 zu vermeiden, sollten diese Sacklöcher 41', 42' lediglich von solcher Größe sein, wie zur Aufnahme der an der Achsplatte 5 ausgebildeten Zapfen 41, 42 unbedingt erforderlich.

Der Vorteil der zapfenförmigen Vorsprünge 41, 42 besteht auch darin, dass sie die Achsplatte 5 seitlich, d. h. quer zur Fahrzeugrichtung, gegenüber dem Achslenker 2 fixieren. Die Achsplatte 5 besitzt daher keine anderen Seitenabstützungen.

### Bezugszeichenliste

- 1: Achskörper
- 2: Achslenker
- 5: Achsplatte
- 6: Achslappen
- 7: Federplatte
- 8: Zugstange
- 9: Sicherungsmutter
- 10: Verformungsbereich
- 11: Backe
- 11A: Innenfläche der Backe
- 12: Backe
- 12A: Innenfläche der Backe
- 14: Maul
- 15: Maulbasis
- 21: Stützbereich
- 22: Stützbereich
- 24: Stützbereich
- 25: Achseinbindungsbereich
- 26: Befestigungsbereich
- 31: Druckfläche
- 32: Druckfläche
- 35: Außenkante
- 36: Außenkante
- 37: Fläche
- 41: Vorsprung, Zapfen
- 42: Vorsprung, Zapfen
- 41': Ausnehmung, Sackloch
- 42': Ausnehmung, Sacklock
- 51: Druckfläche
- 52: Druckfläche
- 61: Gegendruckfläche
- 62: Gegendruckfläche
- a1: Abstand
- a2: Abstand

- a3: Abstand, Spalt
- A: Anlageort
- B: Anlageort
- A': Anlageort
- B': Anlageort
- M: Maulmitte
- w: Winkel

## Patentansprüche

1. Achseinbindung für eine gefederte Fahrzeugachse, mit einem vorzugsweise rohrförmigen Achskörper (1), den Achskörper an seiner Ober- oder Unterseite kreuzenden Achslenkern (2), einer zwischen dem Achskörper (1) und dem jeweiligen Achslenker (2) angeordneten Achsplatte (5) sowie Zugelementen zum Gegeneinanderziehen von Achskörper (1) und Achslenker (2) unter Verformen der Achsplatte (5), wobei die Achsplatte (5)
- an ihrer ersten Seite mit zwei in Längsrichtung zueinander beabstandeten Anlageorten (A, B) versehen ist, an denen die Achsplatte (5) gegen den Achslenker (2) abgestützt ist, und die als Stützbereiche (21, 22) ausgebildet sind, welche bei unverformter Achsplatte (5) ein flaches "V" bilden,
- zwischen den beiden Anlageorten (A, B) mindestens einen Verformungsbereich (10) aufweist,
- an ihrer zweiten Seite mit einem Maul (14) mit einer Maulbasis (15) und zwei Backen (11, 12) mit einander zugewandten Innenflächen (11A, 12A) versehen ist, wobei die Innenflächen (11A, 12A) gegen die Vorder- bzw. die Rückseite des Achskörpers (1) gerichtet sind,
**dadurch gekennzeichnet, dass** der Achskörper (1), zumindest zu Beginn des Verformens, ausschließlich gegen zwei an der Maulbasis (15) ausgebildete Druckflächen (31, 32) abgestützt ist, von denen die erste Druckfläche (31) im Abstand vor, und die zweite Druckfläche (32) im Abstand hinter der Maulmitte (M) angeordnet ist.

2. Achseinbindung nach Anspruch 1, **dadurch gekennzeichnet, dass** sich die beiden Stützbereiche (21, 22) jeweils soweit zu dem Verformungsbereich (10) hin erstrecken, dass ihr gegenseitiger Abstand geringer als die Breite des Mauls (14) ist.

3. Achseinbindung nach einem der vorangehenden Ansprüche, **dadurch gekennzeichnet, dass** die beiden Stützbereiche (21, 22) an ihren einander abgewandten Rändern in abgerundete Außenkanten (35, 36) übergehen.

4. Achseinbindung nach einem der vorangehenden Ansprüche, **dadurch gekennzeichnet, dass** die Achsplatte (5) an ihrer ersten Seite mit zwei Vorsprüngen (41, 42) versehen ist, die einander abgewandt mit Druckflächen (51, 52) versehen sind, wobei jeder Druckfläche (51 bzw. 52) gegenüberliegend der Achslenker (2) mit einer Gegendruckfläche (61 bzw. 62) versehen ist, und sich vor dem Verformen ein Spalt zwischen der jeweiligen Druckfläche (51 bzw. 52) und Gegendruckfläche (61 bzw. 62) befindet.

5. Achseinbindung nach Anspruch 4, **dadurch gekennzeichnet, dass** die Vorsprünge (41, 42) von den Stützbereichen (21, 22) umgeben sind.

6. Achseinbindung nach Anspruch 4 oder 5, **dadurch gekennzeichnet, dass** die Vorsprünge (41, 42) Zapfen sind.

7. Achseinbindung nach einem der Ansprüche 4 bis 6, **dadurch gekennzeichnet, dass** die Vorsprünge (41, 42) rechtwinklig zu dem jeweiligen Stützbereich (21, 22) angeordnet sind.

8. Achseinbindung nach einem der Ansprüche 4 bis 7, **dadurch gekennzeichnet, dass** sich die Gegendruckfläche (61, 62) an der Wandung eines Sacklochs in dem Achslenker (2) befindet.

9. Achsplatte zur Anordnung im Kreuzungsbereich zwischen einem Achskörper und einem diesen führenden Achslenker eines Fahrzeugs, die
- an ihrer ersten Seite mit zwei in Längsrichtung zueinander beabstandeten Anlageorten (A, B) zur Abstützung gegen den Achslenker versehen ist, wobei die Anlageorte (A, B) als Stützbereiche (21, 22) ausgebildet sind, welche ein flaches "V" bilden,
- zwischen den beiden Anlageorten (A, B) mindestens einen Verformungsbereich (10) aufweist,
- an ihrer zweiten Seite mit einem Maul (14) mit einer Maulbasis (15) und zwei Backen (11, 12) mit einander zugewandten Innenflächen (11A, 12A) versehen ist,
**dadurch gekennzeichnet, dass** die Achsplatte zur Abstützung des Achskörpers an ihrer zweiten Seite ausschließlich mit zwei an der Maulbasis (15) ausgebildeten Druckflächen (31, 32) versehen ist, von denen die erste Druckfläche (31) im Abstand vor, und die zweite Druckfläche (32) im Abstand hinter der Maulmitte (M) angeordnet ist.

10. Achsplatte nach Anspruch 9, **dadurch gekennzeichnet, dass** sich die beiden Stützbereiche (21, 22) jeweils soweit zu dem Verformungsbereich (10) hin erstrecken, dass ihr gegenseitiger Abstand geringer als die Breite des Mauls (14) ist.

11. Achsplatte nach Anspruch 9 oder 10, **dadurch gekennzeichnet, dass** die beiden Stützbereiche (21, 22) an ihren einander abgewandten Rändern in abgerundete Außenkanten (35, 36) übergehen.

12. Achsplatte nach einem der Ansprüche 9 bis 11, **dadurch gekennzeichnet, dass** sie an ihrer ersten Seite mit zwei Vorsprüngen (41, 42) versehen ist, die einander abgewandt mit Druckflächen (51, 52) versehen sind.

13. Achsplatte nach Anspruch 12, **dadurch gekennzeichnet, dass** die Vorsprünge (41, 42) von den Stützbereichen (21, 22) umgeben sind.

14. Achsplatte nach Anspruch 12 oder 13, **dadurch gekennzeichnet, dass** die Vorsprünge (41, 42) Zapfen sind.

15. Achsplatte nach einem der Ansprüche 12 bis 14, **dadurch gekennzeichnet, dass** die Vorsprünge (41, 42) rechtwinklig zu dem jeweiligen Stützbereich (21, 22) angeordnet sind.

16. Achslenker zur Führung eines Achskörpers einer Fahrzeugachse, mit
einem Stützbereich (24) für die verschwenkbare Abstützung des Achslenkers gegenüber dem Fahrzeugrahmen,
einem Achseinbindungsbereich (25) für die Verbindung des Achslenkers mit dem Achskörper
und einem Befestigungsbereich (26) für eine Luftfeder,
wobei der Achseinbindungsbereich (25) zwei in Längsrichtung des Achslenkers zueinander beabstandete Anlageorte (A', B') zur Abstützung entsprechender Anlageorte einer zwischen dem Achslenker und dem Achskörper angeordneten Achsplatte nach Anspruch 12 aufweist, **dadurch gekennzeichnet, dass** jeder Anlageort (A', B') mit einer Ausnehmung (41', 42') zur Aufnahme von Vorsprüngen der Achsplatte versehen ist, und dass die Ausnehmungen (41', 42') mit jeweils einer Gegendruckfläche (61, 62) für gegenüberliegende Druckflächen der Vorsprünge der Achsplatte versehen sind, wobei die Gegendruckflächen (61, 62) einander zugewandt sind.

17. Achslenker nach Anspruch 16, **dadurch gekennzeichnet, dass** sich jede Gegendruckfläche (61, 62) an der Wandung eines Sacklochs (41' ,42') befindet.

## Claims

1. Axle connection for a sprung vehicle axle, having a preferably tubular axle beam (1), axle guides (2) which cross the axle beam on its upper or underside, an axle plate (5) which is arranged between the axle beam (1) and the respective axle guide (2), and tension elements for pulling the axle beam (1) and the axle guide (2) against one another with deformation of the axle plate (5), the axle plate (5)
- being provided on its first side with two bearing locations (A, B) which are spaced apart from one another in the longitudinal direction and at which the axle plate (5) is supported against the axle guide (2), and which are configured as supporting regions (21, 22) which form a flat "V" in the case of a non-deformed axle plate (5),
- having at least one deformation region (10) between the two bearing locations (A, B), and
- being provided on its second side with a mouth (14) with a mouth base (15) and two jaws (11, 12) with inner faces (11A, 12A) which face one another, the inner faces (11A, 12A) being directed against the front and the rear side of the axle beam (1),
**characterized in that** the axle beam (1) is supported, at least at the beginning of the deformation, exclusively against two pressure faces (31, 32) which are formed on the mouth base (15) and of which the first pressure face (31) is arranged at a spacing in front of, and the second pressure face (32) is arranged at a spacing behind, the mouth center (M).

2. Axle connection according to Claim 1, **characterized in that** the two supporting regions (21, 22) in each case extend toward the deformation region (10) to such an extent that their spacing from one another is smaller than the width of the mouth (14).

3. Axle connection according to one of the preceding claims, **characterized in that** the two supporting regions (21, 22) merge at their edges which face away from one another into rounded outer edges (35, 36).

4. Axle connection according to one of the preceding claims, **characterized in that** the axle plate (5) is provided on its first side with two projections (41, 42) which are provided with pressure faces (51, 52) such that they face away from one another, each pressure face (51 and 52) being provided with a counterpressure face (61 and 62, respectively) in a manner which lies opposite the axle guides (2), and a gap being situated between the respective pressure face (51 and 52) and counterpressure face (61 and 62, respectively) before the deformation.

5. Axle connection according to Claim 4, **characterized in that** the projections (41, 42) are surrounded by the supporting regions (21, 22).

6. Axle connection according to Claim 4 or 5, **characterized in that** the projections (41, 42) are journals.

7. Axle connection according to one of Claims 4 to 6, **characterized in that** the projections (41, 42) are arranged at right angles with respect to the respective supporting region (21, 22).

8. Axle connection according to one of Claims 4 to 7, **characterized in that** the counterpressure face (61, 62) is situated on the wall of a blind hole in the axle guide (2).

9. Axle plate for arranging in the crossing region between an axle beam and an axle guide of a vehicle, which axle guide guides said axle beam, which axle plate
- is provided on its first side with two bearing locations (A, B) which are spaced apart from one another in the longitudinal direction for support against the axle guide, wherein the bearing locations (A, B) are configured as supporting regions (21, 22) which form a flat "V",
- has at least one deformation region (10) between the two bearing locations (A, B), and
- is provided on its second side with a mouth (14) with a mouth base (15) and two jaws (11, 12) with the inner faces (11A, 12A) which face one another,
**characterized in that** the axle plate, in order to support the axle beam, is provided on its second side exclusively with two pressure faces (31, 32) which are formed on the mouth base (15) and of which the first pressure face (31) is arranged at a spacing in front of, and the second pressure face (32) is arranged at a spacing behind, the mouth center (M).

10. Axle plate according to Claim 9, **characterized in that** the two supporting regions (21, 22) extend in each case toward the deformation region (10) to such an extent that their spacing from one another is smaller than the width of the mouth (14).

11. Axle plate according to Claim 9 or 10, **characterized in that** the two supporting regions (21, 22) merge at their edges which face away from one another into rounded outer edges (35, 36).

12. Axle plate according to one of Claims 9 to 11, **characterized in that** it is provided on its first side with two projections (41, 42) which are provided with pressure faces (51, 52) such that they face away from one another.

13. Axle plate according to Claim 12, **characterized in that** the projections (41, 42) are surrounded by the supporting regions (21, 22).

14. Axle plate according to Claim 12 or 13, **characterized in that** the projections (41, 42) are journals.

15. Axle plate according to one of Claims 12 to 14, **characterized in that** the projections (41, 42) are arranged at right angles with respect to the respective supporting region (21, 22).

16. Axle guide for guiding an axle beam of a vehicle axis, having
a supporting region (24) for the pivotable support of the axle guide with respect to the vehicle frame,
an axle connecting region (25) for connecting the axle guide to the axle beam,
and a fastening region (26) for a pneumatic spring,
the axle connecting region (25) having two bearing locations (A', B') which are spaced apart from one another in the longitudinal direction of the axle guide for supporting corresponding bearing locations of an axle plate according to Claim 12 which is arranged between the axle guide and the axle beam, **characterized in that** each bearing location (A', B') is provided with a recess (41', 42') for receiving projections of the axle plate, and **in that** the recesses (41', 42') are provided with in each case one counterpressure face (61, 62) for pressure faces of the projections of the axle plate which lie opposite one another, the counterpressure faces (61, 62) facing one another.

17. Axle guide according to Claim 16, **characterized in that** each counterpressure face (61, 62) is situated on the wall of a blind hole (41', 42').

## Revendications

1. Fixation d'essieu pour un essieu suspendu de véhicule, avec un corps d'essieu (1) de préférence en forme de tube, avec des bielles d'essieu (2) croisant le corps d'essieu au niveau de son côté supérieur ou inférieur, avec une plaque d'essieu (5) disposée entre le corps d'essieu (1) et la bielle d'essieu (2) respective ainsi qu'avec des éléments de traction pour tirer l'un contre l'autre le corps d'essieu (1) et la bielle d'essieu (2) en déformant la plaque d'essieu (5), la plaque d'essieu (5) :
- étant pourvue, au niveau de son premier côté, de deux points d'appui (A, B) espacés l'un par rapport à l'autre dans la direction longitudinale au niveau desquels la plaque d'essieu (5) est maintenue contre la bielle d'essieu (2) et réalisés sous la forme de zones de maintien (21, 22) formant, en cas de plaque d'essieu (5) non déformée, un « V » plat ;
- comportant entre les deux points d'appui (A, B) au moins une zone de déformation (10) ;
- étant pourvue, au niveau de son deuxième côté, d'une gueule (14) avec une base de gueule (15) et deux mâchoires (11, 12) avec les surfaces intérieures (11A, 12A) orientées l'une vers l'autre, les surfaces intérieures (11A, 12A) étant orientées contre le côté avant et/ou arrière du corps d'essieu (1) ;
**caractérisée en ce que** le corps d'essieu (1) est maintenu, au moins au début de la déformation, exclusivement contre deux surfaces de pression (31, 32) réalisées contre la base de gueule (15), parmi lesquelles la première surface de pression (31) est disposée à une certaine distance devant le milieu de gueule (M) et la deuxième surface de pression (32) est disposée à une certaine distance derrière ledit milieu.

2. Fixation d'essieu selon la revendication 1, **caractérisée en ce que** les deux zones de maintien (21, 22) s'étendent respectivement jusqu'à la zone de déformation (10), que leur distance mutuelle est inférieure à la largeur de la gueule (14).

3. Fixation d'essieu selon l'une quelconque des revendications précédentes, **caractérisée en ce que** les deux zones de maintien (21, 22) se transforment, au niveau de leurs bordures opposées, en des arêtes extérieures (35, 36) arrondies.

4. Fixation d'essieu selon l'une quelconque des revendications précédentes, **caractérisée en ce que** la plaque d'essieu (5) est pourvue, au niveau de son premier côté, de deux saillies (41, 42) pourvues, à l'opposé l'une de l'autre, de surfaces de pression (51, 52), chaque surface de pression (51 et/ou 52) étant pourvue, à l'opposé de la bielle d'essieu (2), d'une surface de contre-pression (61 et/ou 62) et une fente se trouvant, avant la déformation, entre la surface de pression (51 et/ou 52) respective et la surface de contre-pression (61 et/ou 62).

5. Fixation d'essieu selon la revendication 4, **caractérisée en ce que** les saillies (41, 42) sont entourées par les zones de maintien (21, 22).

6. Fixation d'essieu selon la revendication 4 ou 5, **caractérisée en ce que** les saillies (41, 42) sont des tenons.

7. Fixation d'essieu selon l'une quelconque des revendications 4 à 6, **caractérisée en ce que** les saillies (41, 42) sont disposées à angle droit par rapport à la zone de maintien (21, 22) respective.

8. Fixation d'essieu selon l'une quelconque des revendications 4 à 7, **caractérisée en ce que** la surface de contre-pression (61, 62) se trouve au niveau de la paroi d'un trou borgne dans la bielle d'essieu (2).

9. Plaque d'essieu à agencer dans la zone d'intersection entre un corps d'essieu et une bielle d'essieu de véhicule le guidant, ladite plaque :
- étant pourvue, au niveau de son premier côté, de deux points d'appui (A, B) espacés l'un par rapport à l'autre dans la direction longitudinale pour appuyer contre la bielle d'essieu (2), les points d'appui (A, B) étant réalisés sous la forme de zones de maintien (21, 22) formant un « V » plat ;
- comportant entre les deux points d'appui (A, B) au moins une zone de déformation (10) ;
- étant pourvue, au niveau de son deuxième côté, d'une gueule (14) avec une base de gueule (15) et deux mâchoires (11, 12) avec les surfaces intérieures (11A, 12A) orientées l'une vers l'autre ;
**caractérisée en ce que** la plaque d'essieu est pourvue, pour maintenir le corps d'essieu contre son deuxième côté, exclusivement de deux surfaces de pression (31, 32) réalisées contre la base de gueule (15), parmi lesquelles la première surface de pression (31) est disposée à une certaine distance devant le milieu de gueule (M) et la deuxième surface de pression (32) est disposée à une certaine distance derrière ledit milieu.

10. Plaque d'essieu selon la revendication 9, **caractérisée en ce que** les deux zones de maintien (21, 22) s'étendent respectivement jusqu'à la zone de déformation (10), que leur distance mutuelle est inférieure à la largeur de la gueule (14).

11. Plaque d'essieu selon la revendication 9 ou 10, **caractérisée en ce que** les deux zones de maintien (21, 22) se transforment, au niveau de leurs bordures opposées, en deux arêtes extérieures (35, 36) arrondies.

12. Plaque d'essieu selon l'une quelconque des revendications 9 à 11, **caractérisée en ce qu'**elle est pourvue, au niveau de son premier côté, de deux saillies (41, 42) pourvues, à l'opposé l'une de l'autre, de surfaces de pression (51, 52).

13. Plaque d'essieu selon la revendication 12, **caractérisée en ce que** les saillies (41, 42) sont entourées par les zones de maintien (21, 22).

14. Plaque d'essieu selon la revendication 12 ou 13, **caractérisée en ce que** les saillies (41, 42) sont des tenons.

15. Plaque d'essieu selon l'une quelconque des revendications 12 à 14, **caractérisée en ce que** les saillies (41, 42) sont disposées à angle droit par rapport à la zone de maintien (21, 22) respective.

16. Bielle d'essieu servant à guider un corps d'essieu pour un essieu de véhicule, avec :
une zone de maintien (24) pour maintenir de façon pivotante la bielle d'essieu par rapport au châssis de véhicule ;
une zone de fixation d'essieu (25) pour relier la bielle d'essieu au corps d'essieu ; et
une zone de fixation (26) prévue pour une suspension pneumatique ;
la zone de fixation d'essieu (25) comportant deux points d'appui (A', B') séparés l'un par rapport à l'autre dans la direction longitudinale de la bielle d'essieu pour maintenir les points d'appui correspondants d'une plaque d'essieu selon la revendication 12 disposée entre la bielle d'essieu et le corps d'essieu, **caractérisée en ce que** chaque point d'appui (A', B') est pourvu d'un évidement (41', 42') prévu pour recevoir les saillies de la plaque d'essieu et que les évidements (41', 42') sont pourvus de respectivement une surface de contre-pression (61, 62) pour les surfaces de pression opposées des saillies de la plaque d'essieu, les surfaces de contre-pression (61, 62) étant orientées l'une vers l'autre.

17. Bielle d'essieu selon la revendication 16, **caractérisée en ce que** chaque surface de contre-pression (61, 62) se trouve contre la paroi d'un trou borgne (41', 42').
